# EUROPEAN PATENT SPECIFICATION

(11) **EP 0 508 694 B1**
(45) Date of publication and mention of the grant of the patent: **18.06.1997**
(21) Application number: 92302979.7
(22) Date of filing: 03.04.1992
(51) Int. Cl.: H02J 7/34

(54) **A battery charging system**
Batterieladevorrichtung
Système de charge de batterie

(30) Priority: 09.04.1991 GB 9107507
(43) Date of publication of application: 14.10.1992
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- DE-A- 2 132 387
- DE-A- 2 452 162
- DE-A- 2 458 053
- DE-A- 3 939 522
- DE-A- 4 010 343
- US-A- 4 075 504
- US-A- 4 894 764
- TECHNISCHE RUNDSCHAU vol. 81, no. 20, October 1989, BERN CH pages 86 - 89 , XP00007083 STEFFENS 'minikraftwerke in kundenn he'

## Description

The present invention relates to a battery charging system.

Currently electrical power comes from the conversion of a variety of energies such as thermal, hydraulic, nuclear, wind, geothermal, wave, sea water difference and solar energy, etc. However, the demand and supply of each kind of power system presents a conventional problem, i.e. the demand varies between peak hours and non-peak hours. Often there is a hydraulic pump/store station, battery storage plus power transformation and feed back, etc. to meet the variation in demand.

The conventional battery storage system may convert AC power into DC for charging by means of a charging device; or may use a DC power generator for charging batteries; or may use a battery to charge another battery for car-to-car relief.

US Patent No. 4894764 discloses an electric load levelling system which includes a plurality of individual modules for storing and supplying AC electrical power. Such a system comprises a plurality of modules including means for storing DC electrical power. In one embodiment, such means for receiving and storing DC electrical power may comprise a plurality of conventional lead acid battery cells. Power conversion means is associated with each module, and the DC power is then stored in the battery cells. Power transfer means is associated with each module for inputting and outputting AC power to and from the module. Control means is provided for controlling the supply of electrical power to the system and the output of electrical power from the system. The control means also acts to control the supply of power for charging the battery cells, which is preferably during periods of off-peak power demand. A conventional timer clock set according to peak and off-peak periods of demand may be used in connection with the control means for controlling supply or output of power to or from the system.

German Offenlegungsschrift No. 2458053 discloses a fast battery charger for electric vehicles which has an AC network coupled by a bridge rectifier to an intermediate battery that is used in conjunction with the rectifier output to charge the discharged battery connected to external terminals. Interconnected switches allow the intermediate battery to be charged from the rectifier on its own. Fast battery charging occurs during off-peak periods.

An object of the invention is to increase the efficiency of power consumption for the power system and to accomplish charging in a battery storage facility at faster speed.

According to the present invention an intermediate storage charging system comprises an AC input power supply; a rectifier selectively connectable to said AC power supply; an intermediate storage battery connected to an output of said rectifier and chargeable thereby; at least one terminal storage battery coupled both to the intermediate storage battery and the output of said rectifier and chargeable from said intermediate storage battery; a control circuit comprising a device for detecting the state and polarity of the charged battery connected between said intermediate and terminal storage batteries and arranged to charge said terminal storage battery from said intermediate storage battery;
characterised by a further control circuit connected between said AC input power supply and said rectifier, said further control circuit including a cyclic timing device and being arranged to charge said intermediate storage battery during non-peak hours taking into account the state of charge of the intermediate storage battery and by said rectifier, intermediate storage battery and terminal storage battery being connected in parallel while the terminal storage battery is charged.

The invention will now be described by way of example with reference to the drawings in which:

FIG. 1 is a block diagram showing a battery charging system in accordance with the present invention.

FIG. 2 shows a suitable circuit for a battery charging system in accordance with the present invention; and

The reference numbers are summarized below:-
101: AC power supply
102: AC converted to DC charging device
   112: Bridge type rectifying device
   122: Filter inductance
   132: Capacitance filter
103: Relay battery
104-1 ^{∼} 104-n: Output control device
   114: Charge time setting/control device
   124: Charge voltage and current adjusting/switch device
   134: Manual or automatic selective switch
   144: Calculating device
   154: Output starting device
   164: Detection device for saturated state and polarity of battery being charged
105-1 ^{∼} 105-n: Load
106: DC power supply device
   116: DC power generator set
107: Cyclic timing operation device
   117: timer
   127: Electro-mechanical or solid state switch
108: Auxiliary output switch device
   118: Manual or mechanical control switch
   128: Reverse block in diode

The embodiment herein described provides a charging system with a high-efficiency relay battery for charging a battery comprising a monophase or polyphase AC power supply through a rectifier for charging a relay battery, and a relay battery sourced DC output for charging at least one external battery: or a DC power generator provided for charging the relay battery, and a relay battery sourced DC output source provided for charging at least one external battery.

The above-mentioned relay battery for charging external batteries allows for charging a battery independently or jointly with the original AC charging device or DC power generator.

The above-mentioned device may further include a periodic timing cyclic power supply controller for charging at non-peak-hour period: or may include a control device for the charging.

The output of the relay battery may include at least one output control device including charging time setting/control device, charging voltage and current adjusting and switch device, and output voltage or current value manual/or automatic selective switch, measuring device, output starting device and saturated state and polarity of charged battery detecting device, etc.; or may include some functions for charging a plurality of batteries simultaneously.

An advantage of the system is that non-peak-hour power in the evening is used for charging a relay battery and the relay battery is then useable for charging external battery, which not only can store non-peak-hour power to increase the efficiency of power consumption for the system but may accomplish charging at faster speed, i.e. as far as a whole power system is concerned, it is characterized with high efficiency and quick charging.

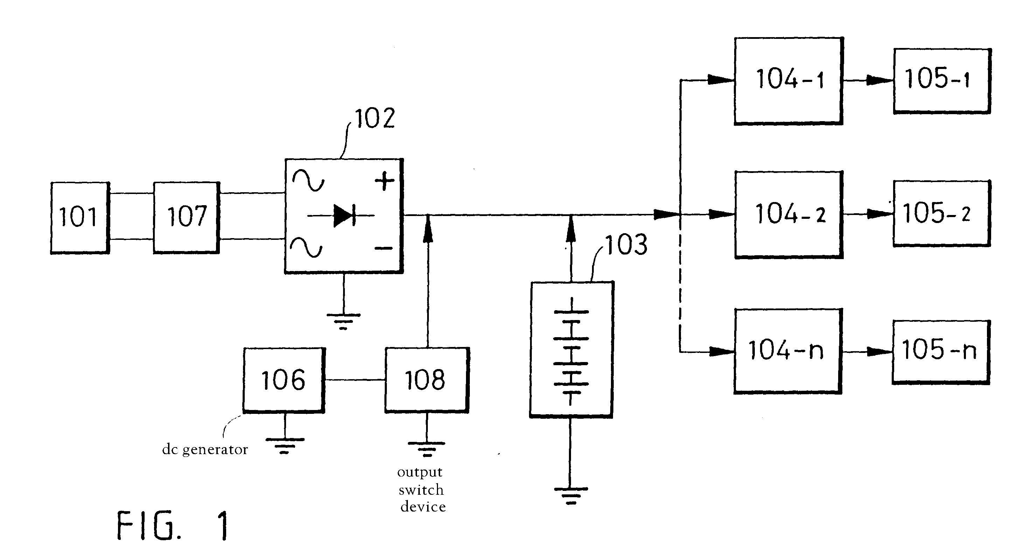

Referring to FIG 1 power is supplied by an AC power supply 101 which may be a monophase or polyphase AC power supply sourced from a local AC power system or an engine-driven type of AC power generator available regularly or as standby power supply, or from other kinds of AC power such as wind energy, solar energy, charge voltage and current adjusting/switch devices, thermal energy, potential energy or temperature difference energy for input into a charge device 102 for converting AC power into DC power with the necessary voltage. A voltage/current display and control device is included in the device 102. The output is connected to a relay battery 103 or other kind of load.

The relay battery comprises a rechargeable battery, for receiving stored electrical energy from the charging device and may be discharged to an external battery or other kind of load through at least one output control device 104-1 thru 104-n. These are connected between the relay battery and loads 105-1 thru 105-n. The control devices include charge time setting/control devices, charge voltage and current adjusting/switch devices, output voltage/or current value manual/or automatic selective switch, measuring device, output starting device, detecting device for saturated state and polarity of charged battery, or with some functions for charging a plurality of external batteries:

Power may also be supplied from a power supply unit 106 comprising a DC power generator;

A periodic timing control device 107 is provided to control the charging device and to allow the non-peak-hour charge time from the AC or DC power supply to be set as well as to determine the best charge time subject to the state of residual electrical energy within the relay battery. It comprises an electromechanical or solid state electronic type periodic setting circuit (conventional day or week, month or year type). The state of the relay battery, is taken into account according to the following conditions:-
1. When the battery charge lies between the lowest saturation value and the saturation value, no charge is transmitted before reaching the non-peak-hour setting time, i.e. charge will be transmitted as soon as the preset non-peak-hour time is reached.
2. Charge is transmitted once residual power within battery is lower than a lowest preset saturation value;
3. When residual power within the battery is saturated or more than a preset saturation limit, no charge is to be made available to it either at peak hours or non-peak hours;

An auxiliary output switch device 108, due to the abovesaid external loads being relay output from relay battery 103, is provided to convert the output of the charge device or DC power supply into a relay battery parallel output or output from the relay battery independently.

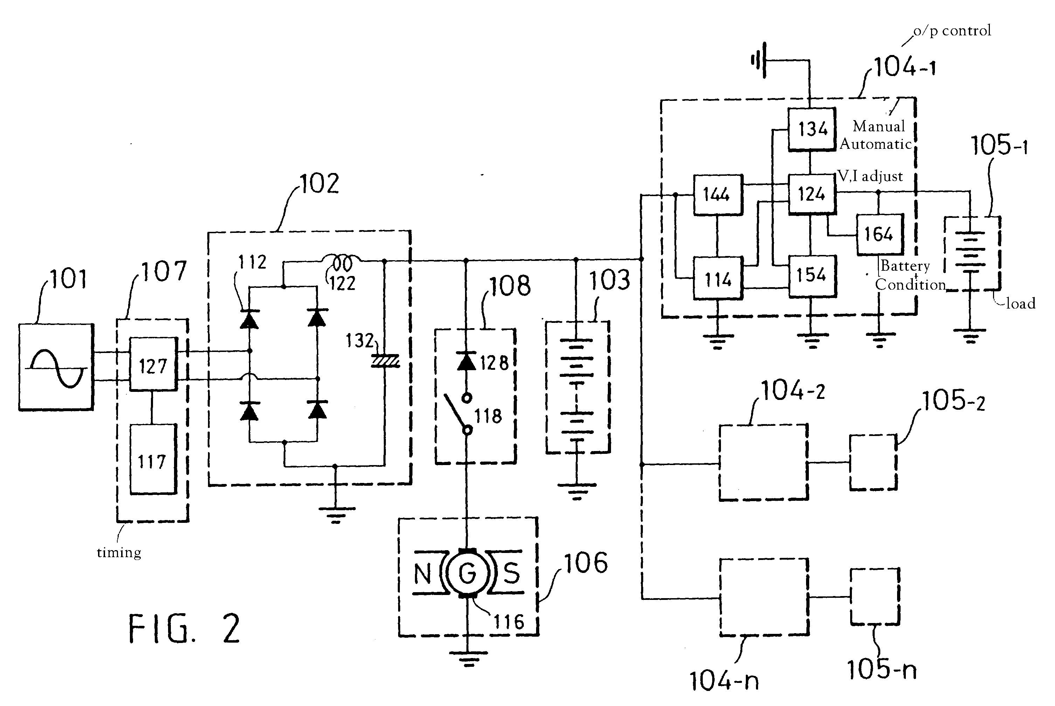

FIG. 2 shows a suitable circuit of the above charging system.

The electro-mechanical or solid state switch 127 is controlled by timer 117 for the control of the power delivery time to the rectifying device 102. The switch and timer form the periodic timing control device 107.

The rectifying device 102 comprises a diode bridge rectifier filter inductance 122 and a capacitance filter 132;

The DC power supply unit 106 comprises a DC power generator set 116.

The auxiliary output switch device 108 comprises a manual or mechanical control switch 118 and a reverse blocking diode 128.

The relay battery set 103 comprises a plurality of rechargeable batteries.

The charge time setting/control device 114, charge voltage and current adjusting/switch device 124, output voltage/or current value manual/or automatic selective switch 134, measuring device 164, output starting device 154, detecting device for saturated state and polarity of charged battery 164, form at least one output control device 104-1 thru 104-n with some functions for charging a plurality of external batteries.

To conclude the above description, the invention provides a charging system and device with a high-efficiency and non-peak-hour energy storage relay battery for store battery to apply non-peak-hour power in the evening for charging a relay battery and the relay battery is thus available for charging an external battery. The system not only can store non-peak-hour power to increase the efficiency of consumption for the system but may accomplish charging concerned, it is characterized with high efficiency and quick charging.

From the foregoing it will be appreciated that the invention includes the following features:
1. A charging system and device with high-efficiency and non-peak-hour energy store relay battery comprising:
   monophase or polyphase AC power supply through commutator for charging relay battery, and relay battery provided DC output power source for charging external battery; or DC power source for charging external battery; or DC power generator is provided for charging external battery;
   above-mentioned device may further include a periodic timing cyclic power supply controller for charging at non-peak-hour period; or may include a control device for the charging;
   the output end of above-mentioned battery may include at least one output control device including charging time setting/control device, charging voltage and current adjusting and switch device, and output voltage or current
   value manual/or automatic selective switch, measuring device, output starting device and saturated state and polarity of charged battery detecting device, etc.; or including some functions for charging a plurality of batteries simultaneously.

   The advantage of the present invention is as follow: to apply non-peak-hour power in the evening for charging relay battery and relay battery is thus provided for charging external battery, which not only can store non-peak-hour power to increase the efficiency of power consumption for the system but may accomplish charging at faster speed, i.e. as far as a whole power system is concerned, it is characterized with high efficiency and quick charging.
2. The charging system and device with high-efficiency and non-peak-hour energy store relay battery for battery according to feature 1 comprising:
   AC power supply including monophase or polyphase AC power supply being sourced from traditional local AC power system or engine-driving type AC power generator to make available regularly or as standby power supply, or from the other kind of AC power from wind energy, solar energy or device, charge voltage and current adjusting/switch device, thermal energy, potential energy or temperature difference energy for input into charge device that converts AC into DC;
   charge device converting AC into DC power, for commutating AC power into DC power with needed voltage value and having necessary voltage/current display and control device for the output against relay battery or the other kind of load;
   relay battery comprising charging and discharging battery, for receiving stored electrical energy from charging device and is charging external battery or other kind of load through the output end;
   output control devices being at least one set in parallel mounted between relay battery and loads, said control device including charge time setting/control device, charge voltage and current adjusting/switch device, output voltage/or current value manual/or automatic selective switch, measuring device,
   output starting device, detecting device for saturated state and polarity of charged battery, or with some functions for charging a plurality of external batteries;
   power supply unit comprising DC power generator set;
   periodic timing control device 107 being provided to control charging device and present non-peak-hour charge time for abovesaid AC or DC power supply as well as to determine best charge time subject to the state of residual electrical energy within the battery, comprising mechanical-electrical or solid electronic type periodic setting circuit (conventional day or week, month or year type) for comparing to lowest saturation value to setting value of battery, with the selections as follows:
      1) When saturation value of battery lies between lowest saturation value and saturation value, no charge shall be carried out before reaching non-pack-hour setting time, i.e. charge will be carried out as soon as reaching present non-peak-hour time;
      2) Charge is to be carried out once residual power within battery is lower than lowest setting saturation value;
      3) When residual power within battery is saturated or more than setting saturation limit, no charge is to be made available either at peak hours or non-peak hours; auxiliary output switch device, due to above-said external loads being relay output from relay battery, such auxiliary output switch device being provided to convert the output of above-said charge device or DC power supply into relay battery parallel output or output from relay battery independently.

The charging system and device with high-efficiency and non-peak-hour energy store relay battery for battery according to feature 1 comprising:
mechanical-electrical or solid switch being controlled by synchronous timer for the control of power delivery time for commutating device which converts AC (including monophase or polyphase) into DC, and said device delivery time for commutating device which converts AC (including monophase or polyphase) into DC, and said device forming periodic timing control device;
AC converting DC charging device comprising bridge type commutating device (including monophase or polyphase) and filter inductance and capacitance set;
DC power supply unit comprising DC power generator set;
auxiliary output switch device comprising manual or mechanical control switch and reversed block diode;
relay battery set comprising a variety of second charging/discharging batteries, charge time setting/control device, charge voltage and current adjusting/switch device, output voltage/or current value manual/or automatic selective switch, measuring device, output starting device, detecting device for saturated state and polarity of charged battery, or at least one set of output control device with some functions for charging a plurality of external batteries.

## Claims

1. An intermediate storage charging system, comprising:
an AC input power supply (101);
a rectifier (112) selectively connectable to said AC power supply;
an intermediate storage battery (103) connected to an output of said rectifier and chargeable thereby;
at least one terminal storage battery (105) coupled both to the intermediate storage battery and the output of said rectifier and chargeable from said intermediate storage battery;
a control circuit (104) comprising a device for detecting the state and polarity of the charged battery connected between said intermediate and terminal storage batteries (103,105) and arranged to charge said terminal storage battery from said intermediate storage battery;
characterised by a further control circuit (107) connected between said AC input power supply and said rectifier (112), said further control circuit including a cyclic timing device (117) and being arranged to charge said intermediate storage battery (103) during non-peak hours taking into account the state of charge of the intermediate storage battery and by said rectifier (112), intermediate storage battery (103) and terminal storage battery (105) being connected in parallel while the terminal storage battery is charged.

2. An intermediate storage charging system according to claim 1, wherein said AC input power supply (101) comprises a monophase AC power supply.

3. An intermediate storage charging system according to claim 1, wherein said AC input power supply (101) comprises a multiple-phase AC power supply.

4. An intermediate storage charging system according to any preceding claim wherein said rectifier (112) is a full wave rectifier.

5. An intermediate storage charging system according to any preceding claim wherein there are a plurality of terminal storage batteries (105-1....105-n) whereby the system may function to charge the plurality of terminal storage batteries simultaneously.

6. An intermediate storage charging system according to claim 5, wherein said first-mentioned control circuit (104) comprises an output control device connected between each of the plurality of terminal storage batteries and the output of said rectifier, said output control devices optionally including charge-time controllers (114), charging voltage controllers (124), charging current controllers (124), and output measuring devices (164).

7. The intermediate storage charging system according to any preceding claim, further comprising an auxiliary DC input source (106) connectable to the interconnection of said intermediate storage battery (103), rectifier (112) output, and second control circuit (104) for generating a charging current.

## Patentansprüche

1. Zwischenspeicher- Ladesystem enthaltend:
eine Wechselspannungsenergiezuführung (101);
einen Gleichrichter (112) wahlfrei verbindbar mit der Wechselspannungs- Energiezuführung;
eine Hilfsbatterie (103), die an einen Ausgang des Gleichrichters angeschlossen ist und durch diesen ladbar ist;
wenigstens eine Ausgangs- Speicherbatterie (105), die sowohl an die Zwischenspeicherbatterie und den Ausgang des Gleichrichters angeschlossen ist und durch die Zwischenspeicherbatterie ladbar ist;
eine Steuerschaltung (104), enthaltend eine Vorrichtung zum Erkennen des Zustandes und der Polarität der geladenen Batterie, die zwischen dem Zwischen- und dem Endspeicherbatterien (103, 105) geschaltet ist und zum Laden der Ausgangsbatterie aus der Zwischenspeicherbatterie angeordnet ist;
gekennzeichnet durch eine weitere Steuerschaltung (107), die zwischen der Wechselspannungseingangsenergiezuführung und dem Gleichrichter (112) geschaltet ist, wobei die weitere Steuerschaltung einen Ringzähler (117) und zum Laden der Zwischenspeicherbatterie (103) während Nichtspitzenzeiten unter Berücksichtigung des Ladezustandes der Zwischenspeicherbatterie angeordnet ist und durch den Gleichrichter (112), die Zwischenspeicherbatterie (103) und die Endspeicherbatterie (105), die parallel geschaltet sind, während die Endspeicherbatterie geladen wird.

2. Ein Zwischenspeicher- Ladesystem nach Anspruch 1, bei dem die Wechselstromeingangsenergiezuführung (101) eine Einphasen-Wechselstrom- Energiezuführung enthält.

3. Zwischenspeicher- Ladesysteme nach Anspruch 1, bei dem die Wechselstromeingangsenergiezuführung (101) eine Mehrphasen- Wechselstrom- Energiezuführung enthält.

4. Zwischenspeicher- Ladesystem nach einen der vorhergehenden Ansprüche, bei dem der Gleichrichter ein Vollwellen-Gleichrichter ist.

5. Zwischenspeicher- Ladesystem nach einem der vorstehenden Ansprüche, bei dem eine Vielzahl von Endspeicherbatterien (105-1...105-n) vorgesehen ist, wobei das System zum gleichzeitigen Laden der Vielzahl der Endspeicherbatterien dient.

6. Zwischenspeicher- Ladesystem nach Anspruch 5, bei dem die zuerst erwähnte Steuerschaltung (104) eine Ausgangssteuervorrichtung enthält, die zwischen jeder der Vielzahl von Endspeicherbatterien und dem Ausgang des Gleichrichters geschaltet ist, wobei die Ausgangssteuerschaltung wahlweise Ladezeit-Controller (114), Ladespannungs- Controller (124), Ladestrom-Controller (124) und Ausgangsmeßvorrichtungen (164) enthält.

7. Zwischenspeicher- Ladesystem nach den vorstehenden Ansprüchen, weiterhin enthaltend eine Hilfs- Gleichstrom- Eingangsquelle (106), die an die Zwischenverbindung zwischen die Zwischenspeicherbatterie (103) mit dem Ausgang des Gleichrichters (112) und die zweite Steuerschaltung (104) zur Erzeugung eines Ladestromes anschließbar ist.

## Revendications

1. Système de charge d'une batterie de stockage intermédiaire comprenant:
une source d'alimentation de courant en courant alternatif (101) ;
un redresseur (112) pouvant être connecté de façon sélective à ladite source d'alimentation de courant alternatif ;
une batterie de stockage intermédiaire (103) reliée à une sortie dudit redresseur et pouvant être chargée par lui;
au moins une batterie de stockage terminale (105) couplée à la fois à ladite batterie de stockage intermédiaire et à la sortie dudit redresseur et pouvant être chargée à partir de ladite batterie de stockage intermédiaire;
un circuit de commande (104) comprenant un dispositif pour détecter l'état et la polarité de la batterie chargée, connecté entre lesdites batteries de stockage intermédiaire et terminale (103, 105) et disposé de façon à charger ladite batterie de stockage terminale à partir de ladite batterie de stockage intermédiaire ;
le système étant caractérisé par un autre circuit de commande (107) connecté entre ladite source d'alimentation de puissance en courant alternatif et ledit redresseur (112), ledit autre circuit de commande comprenant un dispositif de temporisation cyclique (117) et étant disposé de façon à charger ladite batterie de stockage intermédiaire (103) pendant les heures creuses en tenant compte de l'état de charge de la batterie de stockage intermédiaire, et par le fait que ledit redresseur (112), ladite batterie de stockage intermédiaire (103) et ladite batterie de stockage terminale (105) sont connectés en parallèle lorsque la batterie de stockage terminale est chargée.

2. Système de charge de stockage intermédiaire conforme à la revendication 1, dans lequel ladite source d'alimentation de courant en courant alternatif (101) comprend une alimentation en courant alternatif monophasé.

3. Système de charge de stockage intermédiaire selon la revendication 1, dans lequel ladite source d'alimentation de courant alternatif (101) comprend une source d'alimentation en courant alternatif multiphasé.

4. Système de charge de stockage intermédiaire selon l'une quelconque des revendications précédentes, dans lequel ledit redresseur (112) est un redresseur pleine onde.

5. Système de charge de stockage intermédiaire selon l'une quelconque des revendications précédentes, dans lequel il existe une pluralité de batteries de stockage terminales (105-1 ... 101-n) grâce à quoi le système peut fonctionner de façon à charger la pluralité des batteries de stockage terminales de façon simultanée.

6. Système de charge de stockage intermédiaire selon la revendication 5, dans lequel le premier circuit mentionné de commande (104) comprend un dispositif de commande de sortie connecté entre chacune de la pluralité des batteries de stockage terminales et la sortie dudit redresseur, lesdits dispositifs de contrôle de sortie comprenant de façon optionnelle des dispositifs de contrôle (114) du temps de charge, des dispositifs de contrôle (124) de la tension de charge, des dispositifs de contrôle (124) de l'intensité du courant de charge, et des dispositifs (164) de mesure en sortie.

7. Système de charge de stockage intermédiaire selon l'une quelconque des revendications précédentes, comprenant en outre une source d'alimentation auxiliaire en courant continu (106) pouvant être connectée à l'interconnexion de ladite batterie de stockage intermédiaire (103) ,de la sortie du redresseur (112) et du second circuit de commande (104) pour engendrer un courant de charge.
